# EUROPEAN PATENT SPECIFICATION

(11) **EP 0 932 540 B1**
(45) Date of publication and mention of the grant of the patent: **11.09.2002**
(21) Application number: 96941239.4
(22) Date of filing: 24.10.1996
(51) Int. Cl.: B61F 5/00, B64D 15/16, C09K 3/18

(54) **DEICING DEVICE**
ENTFROSTER VORRICHTUNG
DISPOSITIF DE DEGIVRAGE

(43) Date of publication of application: 04.08.1999
(73) Proprietor: Bombardier Transportation GmbH, 13627 Berlin (DE)
(72) Inventor: ANDERSSON, Jonas, S-252 48 Helsingborg (SE); NILSSON, Bo, S-241 31 Eslöv (SE); BENGTSSON, Hans, S-222 26 Lund (SE); NYBOM, Göran, S-247 36 Södra Sandby (SE)
(74) Representative: Thielmann, Andreas
(86) International application number: SE9601365
(87) International publication number: WO98017519

(56) References cited:
- EP-A- 0 646 524
- WO-A-92/08767
- FR-A- 950 406
- GB-A- 549 400
- SE-B- 464 413

## Description

### TECHNICAL FIELD

The invention relates to a device for repelling ice and snow on surfaces in vehicles which are used in winter environment and for preventing such surfaces from being coated with ice or snow.

### BACKGROUND ART

When using a vehicle under wintry conditions where the vehicle is driven a distance over areas with different climatic conditions, as is the case, for example, in the Nordic countries, Central Europe and in the Northern parts of North America, operational disturbances may occur in connection with the accumulation of ice or snow on free construction surfaces. The disturbances referred to here occur primarily in rail-mounted vehicles, but similar disturbances may occur also in other types of vehicles, in which case the invention may be applied also to other types of vehicles.

The problem which, according to the above, arises during winter operation, and then preferably in railway vehicles, is that certain surfaces, particularly in a bogie part arranged for the vehicle, are coated with snow - wet or dry - whereby the snow gives off heat to a metal surface located under the snow and hence freezes. In a fairly short time, for example when a vehicle travels over a distance of 400 km, which is operated by a high-speed train in three hours, such an amount of snow may freeze that large parts of the metal surfaces of the bogie are embedded in ice or snow. There is a great probability that these snow or ice coatings will prevent different functions, for example a suspension function which is necessary both from the point of view of safety (primarily derailment) and comfort. These disturbances may lead to various measures, which are necessary from the point of view of safety, such as reduction of the travel speed and, in the worst case, putting the vehicle out of operation, which has a detrimental influence on traffic, profitability, etc.

The methods which are currently used for dealing with the above-mentioned problems mainly comprise:
- protecting/sealing certain parts of a vehicle bogie, i.e. those surfaces which should primarily be prevented from being covered with snow or ice, and
- deicing.

Sealing certain parts of a bogie, for example, has proved to be virtually impossible. In addition, especially during non-winter operation, heavy wear and abrasion damage arises at the contact surfaces between the sealing elements, which results in increased maintenance costs.

Deicing of coated surfaces may only be performed at certain locations and certain parts of the surfaces which must not be covered with ice. For a deicing operation to be successful, it is further required that all ice be removed, since the remaining ice otherwise constitutes an excellent base for a new layer of ice. This implies that deicing is time-consuming and must take place sometimes as frequent intervals. Various methods for deicing are known and will not be described here.

One example of a known deicing method is the device disclosed in the patent document GB 549,400, where a surface in the form of the leading edge of an aircraft wing is coated with an inflatable shoe. The task of this shoe is to prevent ice from accumulating in that the shoe is made as an elastic body of rubber or a rubber-like material to break up and loosen accumulated ice in that the elastic surfaces of the body can be stretched when the body is caused to expand by inflating a hose built into the body, whereupon the ice is removed by the airflow. However, this device does not prevent the actual formation of ice but only attempts to solve the problem of removing ice which has already accumulated on these stretchable surfaces. Further, this method requires an active measure in that the body is caused to become stretched or deformed by means of a facility, in this case by expansion via the inflatable hose.

Also patent document EP 646 524 A1 shows a deicing device of a similar kind, in which a deicing element is in the form of an elastic layer, which in this example is made of polyurethane. The function of this ice-repelling layer is the same as in the device of the above-mentioned GB document, that is, that the elastic properties of the layer are employed to utilize stresses which arise between accumulated ice and the elastic layer lying under the ice, where the elastic layer cooperates with an associated active deicing element which uses heat, pneumatics or an electromagnetic device to actively contribute to deicing of the intended surface by supplying heat to the ice-repelling layer, or by deformations via expansion or vibration thereof. Also in this example, an elastic and stretchable surface is used in conjunction with an active element for achieving the deicing device.

### SUMMARY OF THE INVENTION

The invention relates to a method and a device for preventing the accumulation of snow or ice on an external surface of a vehicle element, wherein the method comprises coating the surface with at least two layers, of which the outer layer is formed as an even, stiff and smooth surface, whereas the inner layer is in the form of a heat-insulating, elastic layer.

The outer and inner layers must be used together in order to achieve the intended effect

The purpose of the even, stiff and smooth surface of the outer layer is to
- constitute a surface which is difficult to cover by snow, whereby the choice of material and the design thereof are of great importance,
- have considerably greater stiffness than the underlying insulating layer to provide great stresses in any accumulated ice when being loaded, for example caused by wind forces or vibrations, such that the ice is broken loose from the surface, and to
- transport away any remaining snow or ice.

All surfaces should be inclined towards the horizontal plane, which implies that the surface of the outer layer, or part-surfaces thereof, when coating, for example, a horizontal surface of a frame member in a bogie is given a downward inclination. The material in the outer layer mentioned should have a high stiffness and possess toughness (especially impact toughness at low temperatures). Further, this material should exhibit a low wettability (i.e. be hydrophobic), a low coefficient of thermal conductivity (k-value), a low thermal capacity (c), and, as mentioned above, an even and smooth surface.

The task of the insulating inner layer is to
- prevent heat emission during phase transformation of water or snow into ice and hence freezing on the surface layer of the surface of the coated vehicle element, and to
- have a considerably lower stiffness than the surface layer to allow this surface layer to be locally deformed and hence give rise to the desirable stresses in any ice accumulated on the surface layer.

The heat-insulating properties of the inner layer are important for the function of the device. A utilization of a heat-insulating, elastic layer in cooperation with a stiff but locally deformable thin layer, applied outside the first layer, to achieve the intended effect without actively acting means is not known from the prior art.

An important advantage of the invention is that no actively operating constituent which constitutes a component in a deicing device need be utilized.

As an example of a field of use of the invention, an element in a vehicle has been mentioned here. The object of the invention may, of course, be used also for deicing stationary or other movable structural members, for example, in accordance with the principle described above, for deicing beams in bridges, masts and other structures.

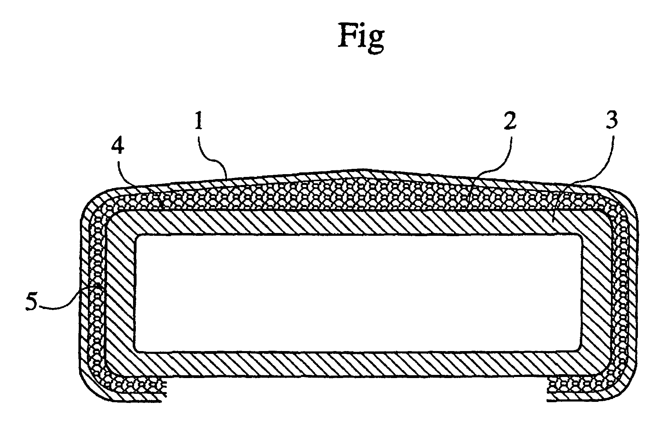

### BRIEF DESCRIPTION OF THE DRAWING

The figure schematically illustrates, in a vehicle, a structural part, the external surface of which has been coated with the outer and inner layers according to the invention, described above.

### DESCRIPTION OF THE PREFERRED EMBODIMENTS

An example of an embodiment of the invention is shown in the figure, in which a structural member, which constitutes part of a vehicle, which in the example shown may be in the form of a box girder for a bogie, has been coated with the snow- and ice-repelling outer and inner layers 1 and 2. As is clear from the figure, the mentioned snow- and ice-repelling outer and inner layers 1 and 2 are applied onto an upper plane surface 4 and side surfaces 5 of the external surfaces of the box girder 3. The outer layer 1 exhibits the properties mentioned above, whereby the figure also illustrates that the outer layer 1 is formed to exhibit a inclination towards the horizontal plane, which means that the upper plane surface of the outer layer 1 in the example is formed with a roof-like geometry.

The inner layer 2 consists of an insulation between the surface of the vehicle element 3 and the outer layer 1.

As an example of a preferred material combination, a porous polyethylene in the inner layer 2 and polycarbonate plastic in the outer layer 1 are mentioned.

The thickness of the inner layer 2 is chosen in a preferred optimized variant to be 5 mm, whereas the outer layer 1 is given the thickness 2 mm in a preferred combination. Depending on the application, the area of the surface to be deiced, etc., other optimized material and thickness combinations may be preferable.

To quantify the quantities which describe the properties of the materials in the inner and outer layers, these values are given for an embodiment in the table below.

| Quantity | Inner layer | Outer layer |
|---|---|---|
| Surface weight | 7 - 17 gr/m2 | - |
| E-modulus | - | 2000-2500 Mpa |
| Thermal conductivity coefficient (k) | < 0.05 | < 0.2 |
| Thermal capacity (cp) | - | < 1.5 |
| Impact strength | - | No rupture (NB), -40°C (DIN 53453) |
| Wettability (K) | - | < 0.25 |

The material in the surface according to the invention should not be rubber-elastic but stiff, which implies that the external surface in the deicing device according to the invention differs from what is the intention of the outer surface according to the known devices described. The stiffness of the outer layer 1 has a preferred stiffness as described in the table, but materials with stiffnesses in the interval 1000-10,000 MPa may be used. The ideal value of the E-modulus of the outer layer is 25% of the E-modulus of the ice, which amounts to 10,000 MPa, which implies that a material with a preferred E-modulus of around 2500 MPa may be used. Polycarbonate with an E-modulus amounting to 2200 MPa is a suitable such material for use in the outer layer 1.

## Claims

1. A method for preventing the accumulation of snow or ice on an external surface of a structural member (3), in particular a vehicle member, **characterized in that** the plane surface (4) and the side surfaces (5) of the structural member (3) are coated with at least one outer layer (1) and one inner layer (2), wherein the outer layer (1) externally exhibits an even, stiff and smooth surface, whereas the inner layer (2) consists of a material with a high heat-insulating capacity and a high elasticity.

2. A method according to claim 1, **characterized in that** the semi-surfaces of the outer layer (1) are inclined downwards towards the exterior of the exterior of the structural member (3).

3. A method according to claim 1, **characterized in that** the inner layer (2) has lower stiffness than the outer layer (1).

4. A device for preventing the accumulation of snow or ice on an external surface of a structural member, in particular a vehicle member, **characterized in that** it comprises at least one outer layer (1) and one inner layer (2) for coating the plane surface (4) and the side surfaces (5) of the structural member (3), wherein the outer layer (1) externally exhibits an even, stiff and smooth surface, whereas the inner layer (2) consists of a material with a high heat-insulating capacity and a high elasticity.

5. A device according to claim 4, **characterized in that** the semi-surfaces of the outer layer (1) have a downward inclination towards exterior of the structural member (3).

6. A device according to claim 4 or 5, **characterized in that** the outer layer (1) has a higher stiffness than the inner layer (2).

7. A device according to any of claims 4 to 6, **characterized in that** the outer layer has an E-modulus which amounts to 1000 - 10,000 MPa.

8. A device according to any of claims 4 to 6, **characterized in that** the outer layer has an E-modulus which preferably amounts to 2000 - 2500 MPa.

9. A device according to any of claims 4 to 8, **characterized in that** the material in the outer layer (1) possesses impact strength and is hydrophobic, has a low coefficient of thermal conductivity and a low thermal capacity.

10. A device according to claims 4 to 9, **characterized in that** the outer layer (1) is made of an amorphous thermoplastic resin, such as, for example, polycarbonate plastic.

11. A device according to claims 4 to 10, **characterized in that** the inner layer (2) has such a chosen stiffness that it may be locally elastically deformed.

12. A device according to claims 4 to 11, **characterized in that** the inner insulating layer (2) is made of a porous material, such as, for example, porous polyethylene.

13. A device according to claims 4 to 11, **characterized in that** the inner insulating layer (2) has a coefficient of thermal conductivity of k < 0.05.

## Patentansprüche

1. Verfahren zum Verhindern der Ansammlung von Schnee oder Eis auf einer äußeren Oberfläche eines Bauelementes (3), insbesondere eines Fahrzeug-Bauelementes, **dadurch gekennzeichnet, daß** die ebene Oberfläche (4) und die Seitenoberflächen (5) des Bauelementes (3) mit mindestens einer äußeren Schicht (1) und einer inneren Schicht (2) beschichtet sind, wobei die äußere Schicht (1) außen eine gleichmäßige, steife und glatte Oberfläche aufweist, wohingegen die innere Schicht (2) aus einem Material mit einem hohen Wärmedämmvermögen und einer hohen Elastizität besteht.

2. Verfahren nach Anspruch 1, **dadurch gekennzeichnet, daß** die Teiloberflächen der äußeren Schicht (1) abwärts gegen das Äußere des Bauelementes (3) hin geneigt sind.

3. Verfahren nach Anspruch 1, **dadurch gekennzeichnet, daß** die innere Schicht (2) geringere Steifigkeit als die äußere Schicht (1) aufweist.

4. Vorrichtung zum Verhindern der Ansammlung von Schnee oder Eis auf einer äußeren Oberfläche eines Bauelementes, insbesondere eines Fahrzeug-Bauelementes, **dadurch gekennzeichnet, daß** sie mindestens eine äußere Schicht (1) und eine innere Schicht (2) zum Beschichten der ebenen Oberfläche (4) und der Seitenoberflächen (5) des Bauelementes (3) aufweist, wobei die äußere Schicht (1) außen eine gleichmäßige, steife und glatte Oberfläche aufweist, wohingegen die innere Schicht (2) aus einem Material mit einem hohen Wärmedämmvermögen und einer hohen Elastizität besteht.

5. Vorrichtung nach Anspruch 4, **dadurch gekennzeichnet, daß** die Teiloberflächen der äußeren Schicht (1) eine abwärtsgerichtete Neigung gegen das Äußere des Bauelementes (3) hin aufweisen.

6. Vorrichtung nach Anspruch 4 oder 5, **dadurch gekennzeichnet, daß** die äußere Schicht (1) eine höhere Steifigkeit als die innere Schicht (2) aufweist.

7. Vorrichtung nach einem der Ansprüche 4 bis 6, **dadurch gekennzeichnet, daß** die äußere Schicht einen E-Modul aufweist, der 1.000 - 10.000 MPa beträgt.

8. Vorrichtung nach einem der Ansprüche 4 bis 6, **dadurch gekennzeichnet, daß** die äußere Schicht einen E-Modul aufweist, der vorzugsweise 2.000 - 2.500 MPa beträgt.

9. Vorrichtung nach einem der Ansprüche 4 bis 8, **dadurch gekennzeichnet, daß** das Material in der äußeren Schicht (1) Schlagfestigkeit besitzt und wasserabweisend ist, einen niedrigen Wärmeleitfähigkeitskoeffizienten und eine geringe Wärmekapazität aufweist.

10. Vorrichtung nach Anspruch 4 bis 9, **dadurch gekennzeichnet, daß** die äußere Schicht (1) aus einem amorphen thermoplastischen Kunststoff, wie z.B. Polycarbonatkunststoff, hergestellt ist.

11. Vorrichtung nach Anspruch 4 bis 10, **dadurch gekennzeichnet, daß** die innere Schicht (2) eine derart gewählte Steifigkeit aufweist, daß sie örtlich elastisch verformt werden kann.

12. Vorrichtung nach Anspruch 4 bis 11, **dadurch gekennzeichnet, daß** die innere isolierende Schicht (2) aus einem porösen Material, wie z.B. porösem Polyethylen, hergestellt ist.

13. Vorrichtung nach Anspruch 4 bis 11, **dadurch gekennzeichnet, daß** die innere isolierende Schicht (2) einen Wärmeleitfähigkeitskoeffizienten k < 0,05 aufweist.

## Revendications

1. Méthode pour prévenir l'accumulation de neige ou de glace sur une surface externe d'un élément structurel (3), en particulier un élément de véhicule, **caractérisée en ce que** la surface plane (4) et les surfaces latérales (5) de l'élément structurel (3) sont recouvertes par au moins une couche extérieure (1) et une couche intérieure (2), la couche extérieure (1) présentant à l'extérieur une surface régulière, rigide et lisse, tandis que la couche intérieure (2) consiste en une matière à forte capacité d'isolation thermique et forte élasticité.

2. Méthode selon la revendication 1, **caractérisée en ce que** les semi-surfaces de la couche extérieure (1) sont inclinées vers le bas en direction de l'extérieur de l'élément structurel (3).

3. Méthode selon la revendication 1, **caractérisée en ce que** la couche intérieure (2) a une rigidité plus faible que la couche extérieure (1).

4. Dispositif pour prévenir l'accumulation de neige ou glace sur une surface externe d'un élément structurel, en particulier un élément de véhicule, **caractérisé en ce qu'**il comprend au moins une couche extérieure (1) et une couche intérieure (2) pour le revêtement de la surface plane (1) et des surfaces latérales (5) de l'élément structurel (3), la couche extérieure (1) présentant à l'extérieur une surface régulière, rigide et lisse, tandis que la couche intérieure (2) consiste en une matière à forte capacité d'isolation thermique et forte élasticité.

5. Dispositif selon la revendication 4, **caractérisé en ce que** les semi-surfaces de la couche extérieure (1) sont inclinées vers le bas en direction de l'extérieur de l'élément structurel (3).

6. Dispositif selon la revendication 4 ou 5, **caractérisé en ce que** la couche extérieure (1) a une rigidité plus élevée que la couche intérieure (2).

7. Dispositif selon une des revendications 4 à 6, **caractérisé en ce que** la couche extérieure (1) a un module E qui est de 1000 à 10.000 MPa.

8. Dispositif selon une des revendications 4 à 6, **caractérisé en ce que** la couche extérieure (1) a un module E qui est de préférence de 2000 à 2500 MPa.

9. Dispositif selon une des revendications 4 à 8, **caractérisé en ce que** la matière dans la couche extérieure (1) possède de la résistance au choc et est hydrofuge, a un bas coefficient de conductivité thermique et une faible capacité thermique.

10. Dispositif selon une des revendications 4 à 9, **caractérisé en ce que** la couche extérieure (1) est constituée d'une résine thermoplastique amorphe, telle que, par exemple, du plastique au polycarbonate.

11. Dispositif selon une des revendications 4 à 10, **caractérisé en ce que** la couche intérieure (2) a une dureté choisie de manière à ce qu'elle puisse être déformée localement de manière élastique.

12. Dispositif selon une des revendications 4 à 11, **caractérisé en ce que** la couche intérieure isolante (2) est constituée d'une matière poreuse, comme par exemple du polyéthylène poreux.

13. Dispositif selon une des revendications 4 à 11, **caractérisé en ce que** la couche intérieure isolante (2) a un coefficient de conductivité thermique de k < 0,05.
